# EUROPÄISCHE PATENTANMELDUNG

(11) **EP 1 080 868 A1**
(43) Veröffentlichungstag der Anmeldung: **07.03.2001**
(21) Anmeldenummer: 99117091.1
(22) Anmeldetag: 31.08.1999
(51) Int. Cl.: B29C 47/52, B29C 47/10

(54) **Vorrichtung zum Abstreifen von elastomerem Medium und Anordnung mit einer Zahnradpumpe**

(71) Anmelder: Maag Pump Systems Textron AG, 8023 Zürich (CH)
(72) Erfinder: Sonder, Hans, 8636 Wald (CH); Lussi,Gerhard, 8712 Stäfa (CH)
(74) Vertreter: Troesch Scheidegger Werner AG

(57) **Zusammenfassung**

Die Erfindung betrifft eine Vorrichtung (20) zum Abstreifen von zähflüssigem oder festem Medium (M), das auf einer Walze (4) oder dgl. haftet, wobei die Abstreifvorrichtung (20) aus einem plattenförmigen Abstreifelement (21), einer Halterung (22) und Befestigungsmitteln (23, 25) besteht. Erfindungsgemäss ist das Abstreifelement (21) von der Halterung (22) zumindest abschnittsweise umfasst. Des weiteren ist eine Füttervorrichtung (11) mit der erfindungsgemässen Abstreifvorrichtung (20) und eine Anordnung, bestehend aus einer Füttervorrichtung (20) und einer Zahnradpumpe (10), angegeben.

## Beschreibung

Die vorliegende Erfindung betrifft eine Abstreifvorrichtung nach dem Oberbegriff des Patentanspruchs 1, eine Füttervorrichtung mit einer solchen Abstreifvorrichtung sowie eine Anordnung mit der Füttervorrichtung und einer Zahnradpumpe.

Zahnradpumpen werden insbesondere zum Fördern von Elastomeren, d.h. Gummimischungen, verwendet, wobei gemäss der EP-0 897 063-A2 zum vollständigen Füllen der Zahnlücken der Zahnräder mit Fördermedium eine Füttervorrichtung vorgesehen ist, die in Transportrichtung des Fördermediums gesehen vor der Zahnradpumpe angeordnet ist. Die Füttervorrichtung besteht im wesentlichen aus zwei beabstandeten Einzugswalzen, auf denen Fördermedium haften kann. Aus diesem Grund wurden an den Einzugswalzen Abstreifer vorgesehen, mit Hilfe derer Fördermedium von den Einzugswalzen abgestreift werden soll.

Der bekannte Abstreifer weist jedoch den Nachteil auf, dass aufgrund von Vibrationen und/oder aufgrund von hohen Drücken eine plastische Verformung des Abstreifers auftreten kann, womit dessen Funktion nicht mehr gewährleistet ist.

Der vorliegenden Erfindung liegt daher die Aufgabe zugrunde, eine Vorrichtung anzugeben, welche die vorstehend genannten Nachteile nicht aufweist.

Diese Aufgabe wird durch die im kennzeichnenden Teil des Patentanspruchs 1 angegebenen Massnahmen gelöst. Vorteilhafte Ausgestaltungen der Erfindung, eine Füttervorrichtung und eine Anordnung sind in weiteren Ansprüchen angegeben.

Die Erfindung wird nachfolgend anhand von Zeichnungen beispielsweise näher erläutert. Dabei zeigen
- Fig. 1: einen Schnitt durch eine an sich bekannte Anordnung zum Fördern eines elastischen Mediums, insbesondere von Gummi, in schematischer Darstellung und
- Fig. 2: einen Schnitt durch eine erfindungsgemässe Anordnung mit Abstreifvorrichtungen, ebenfalls in schematischer Darstellung.

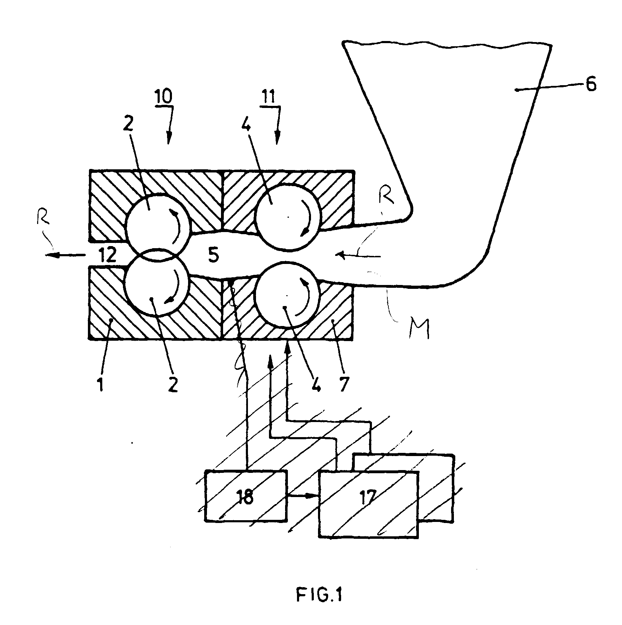

Fig. 1 zeigt einen Schnitt durch eine schematisch dargestellte, an sich bekannte Anordnung (siehe beispielsweise EP-0 897 063-A2), bestehend aus einer Zahnradpumpe 10, einer Füttervorrichtung 11 und einem Fülltrichter 6.

Im Fülltrichter 6 ist das Fördermedium M - beispielsweise in Form von Granulat, zähflüssiger Masse oder Pulver - enthalten, das durch die Schwerkraft und/oder mit einer Förderschnecke (in Fig. 1 nicht dargestellt) in Richtung Füttervorrichtung 11 gepresst wird.

Die Füttervorrichtung 11 weist zwei berührungsfreie Einzugswalzen 4 in einem Gehäuse 7 auf. Der Abstand der beiden Einzugswalzen 4 ist in Abhängigkeit des Fördermediums M bzw. dessen Eigenschaften bzw. in Abhängigkeit des Druckes am Ausgang der Füttervorrichtung 11 einstellbar.

Die Zahnradpumpe 10 ist in Transportrichtung R des Fördermediums M gesehen nach der Füttervorrichtung 11 angeordnet und besteht in bekannter Weise aus zwei ineinandergreifenden Zahnrädern 2, die in einem Pumpengehäuse 1 enthalten und gelagert sind und die das Fördermedium M von einer Saugseite 5 auf eine Druckseite 12 in den Zahnlücken transportieren.

Bei der in Fig. 1 dargestellten Ausführungsform wird das Fördermedium M mit Hilfe der zwei Einzugswalzen 4 auf die Saugseite 5 der Zahnradpumpe 10 und von dort in die Zahnlücken der Zahnräder 2 gefördert. Die Drehgeschwindigkeit der Einzugswalzen 4 ist dabei vorzugsweise unabhängig von der Drehgeschwindigkeit der Zahnräder 2 der Zahnradpumpe 10 einstellbar bzw. stellt sich in selbstregelnder Weise unabhängig von der Drehgeschwindigkeit der Zahnräder 2 ein.

Die Einzugswalzen 4 bewegen sich im Einzugsspalt in Transportrichtung R des Fördermediums M, wie dies mit den Pfeilen bei den in Fig. 1 dargestellten Einzugswalzen 4 angegeben ist. Der auf der Saugseite 5 entstehende Druck im Fördermedium M bewirkt bei idealer Einstellung, dass die Zahnlücken der Zahnradpumpe 10 vollständig gefüllt werden. Ist der Druck auf der Saugseite 5 zu hoch, so ist zur Vermeidung einer Überfütterung der Zahnlücken das Drehmoment bzw. die Drehzahl der Einzugswalzen 4 zu reduzieren. Bei zu niedrigem Druck auf der Saugseite 5 ist das Drehmoment bzw. die Drehzahl entsprechend zu erhöhen.

Bei einer Ausführungsform der in Fig. 1 dargestellten Vorrichtung, bei der anstelle von Granulat oder Pulver Streifenmaterial zugeführt wird, entfällt der Fülltrichter 6. Das Streifenmaterial (sogenannter Mischungsbänder) wird von den zwei Einzugswalzen 4 selbständig eingezogen.

Damit kein Fördermedium M an den Walzen 4 haften bleibt, sind sogenannte Abstreifvorrichtungen auf der Saugseite 5 vorgesehen.

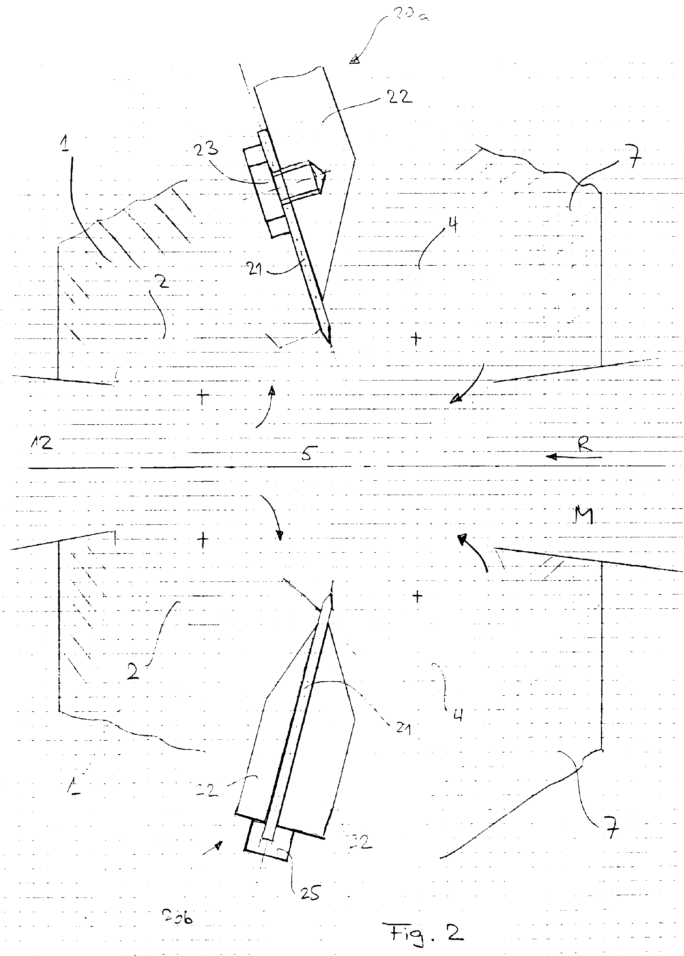

Fig. 2 zeigt neben den dargestellten Komponenten der Anordnung gemäss Fig. 1 zwei Abstreifvorrichtungen 20a bzw. 20b, welche in den Bereich zwischen den Walzen 4 und den Zahnrädern 2, d.h. auf der Saugseite 5 der Zahnradpumpe 10 (Fig. 1), eingreifen.

Mit 20a ist eine Abstreifvorrichtung bezeichnet, die aus einer Halterung 22, einem Abstreifelement 21 und lösbaren Befestigungsmitteln 23 besteht. Das Abstreifelement 21 ist dabei ein plattenförmiges Element, das sich vorzugsweise über die gesamte Breite der Walze 4 erstreckt. Um das Abstreifelement 21 möglichst stabil und ortsfest halten zu können und um dabei gleichzeitig eine Lägeänderung des Abstreifelementes 21 in einfacher Weise zu ermöglichen, sind Schrauben 23 vorgesehen, mit Hilfe derer das Abstreifelement 21 an die Halterung 22 gepresst wird. Damit das Abstreifelement 21 in seiner Längsachse verschoben und damit justiert werden kann, ist dieses mit Langlöchern ausgestattet.

In einer weiteren Ausführungsvariante kann das Abstreifelement 21 durch ein Federelement (nicht dargestellt) an die jeweilige Walze 4 gedrückt werden. Alternativ dazu erfolgt das Anpressen z.B. hydraulisch in Abhängigkeit vom Druck nach den Walzen 4.

Nachteilig bei dieser in bezug auf die Verbindungsart von Abstreifelement 21 und Halterung 22 bekannten Abstreifvorrichtung 20a ist, dass das Abstreifelement 21 aufgrund von Vibrationen und/oder aufgrund von hohen Drücken von der Walze 4 weggepresst wird, wodurch es zu plastischen Verformungen des Abstreifelementes 21 kommt und womit Fördermedium M in den Spalt zwischen Walze 4 und Gehäuse 7 und zwischen Abstreifelement 21 und Halterung 22 eindringt. Als Folge davon ist damit zu rechnen, dass bei der Füttervorrichtung 11 Störungen auftreten.

Erfindungsgemäss wurde daher eine Abstreifvorrichtung 20b angegeben, bei der die Halterung 22 das Abstreifelement 21 mindestens abschnittsweise umfasst, womit dieses wesentlich steifer und formstabiler an der gewünschten Abstreifstelle verbleibt. Die Umfassung des Abstreifelementes 21 ist insbesondere im Bereich der Abstreifstelle vorgesehen, d.h. an der Stelle, an der das Abstreifelement 21 in Berührung oder beinahe in Berührung mit der Walze 4 kommt. Damit kann dem an und für sich schlanken Abstreifelement 21 grössere Steifigkeit und damit Stabilität verschafft werden. Durch eine keilförmige Ausbildung der Halterung 22 - wie dies im Schnittbild gemäss Fig. 2 ersichtlich ist - wird darüber hinaus ermöglicht, dass das Abstreifelement 21 im wesentlichen tangential an die Walze 4 geführt werden kann. Dies hat den weiteren Vorteil, dass der Abstand zwischen den Walzen 4 und den Zahnrädern 2 minimiert werden kann, was von grösster Bedeutung ist, weil ein möglichst geringer Druckabfall zwischen Walzen 4 und Zahnrädern 2 anzustreben ist.

Die Halterung 22 kann dabei aus einem Werkstück oder aus mehrere Teilen bestehen. Die bevorzugte Ausführungsform besteht aus einem einzigen Werkstück, das einen Schlitz zur Aufnahme des plattenförmigen Abstreifelementes 21 aufweist.

Zur Feineinstellung des Abstreifelementes 21 in bezug auf die Walze 4 ist ein Zustellelement 25 vorgesehen, mit Hilfe dessen das Abstreifelement 21 in Längsrichtung verschiebbar ist. Aufgrund der Anordnung des Zustellelementes 25 in der Längsebene des Abstreifelementes 21 kann die Zustellung des Abstreifelemetes 21 (zum Beispiel über Querkeile) rasch erfolgen. Darüber hinaus ist auch eine Feinjustierung während dem Betrieb der Anlage möglich.

Das in Fig. 2 dargestellte Abstreifelement 21 ist am der Walze 4 zugewandten Ende keilförmig ausgebildet. Denkbar ist auch, dass das Abstreifelement 21 im Bereich der Abstreifstelle an die Form der Walze 4 angepasst ist, um ein optimales Abstreifen von auf der Walze 4 haftendem Fördermaterial M zu ermöglichen.

Das Abstreifelement wird vorzugsweise aus einem Material gefertigt, das gegenüber dem Werkstoff, aus welchem die Oberfläche der Walzen besteht, ein gutes Feststoffgleitverhalten, z.B. keine Fressneigung, zeigt.

## Patentansprüche

1. Vorrichtung (20) zum Abstreifen von Fördermedium (M), das auf einer Walze (4) oder dgl. haftet, wobei die Abstreifvorrichtung (20) aus einem plattenförmigen Abstreifelement (21), einer Halterung (22) und Befestigungsmitteln (23, 25) besteht, dadurch gekennzeichnet, dass das Abstreifelement (21) von der Halterung (22) zumindest abschnittsweise umfasst ist.

2. Vorrichtung (20) nach Anspruch 1, dadurch gekennzeichnet, dass die Halterung (22) einen Schlitz (24) zur teilweisen, vorzugsweise mindestens fünfzig prozentigen Aufnahme des Abstreifelementes (21) aufweist.

3. Vorrichtung (20) nach Anspruch 2 oder 3, dadurch gekennzeichnet, dass das Abstreifelement (21) in der Halterung (22) verschiebbar gelagert und in einer gewünschten Position fixierbar ist.

4. Vorrichtung (20) nach einem der vorangehenden Ansprüche, dadurch gekennzeichnet, dass ein Zustellelement (25) vorgesehen ist, mit Hilfe dessen das Abstreifelement (21) in deren Längsachse verschiebbar bzw. fixierbar ist.

5. Vorrichtung (20) nach Anspruch 4, dadurch gekennzeichnet, dass das Abstreifelement (21) über ein Federelement an die Walze (4) anpressbar ist.

6. Vorrichtung (20) nach Anspruch 4, dadurch gekennzeichnet, dass das Abstreifelement (21) über eine Hydraulik an die Walze (4) anpressbar ist, wobei der Anpressdruck vorzugsweise aufgrund eines nach den Walzen (4) gemessenen Druckes im Fördermedium (M) einstellbar ist.

7. Vorrichtung (20) nach einem der vorangehenden Ansprüche, dadurch gekennzeichnet, dass das Abstreifelement (21) aus einem Werkstoff besteht, welcher gute tribologische Reibeigenschaften mit dem Oberflächenwerkstoff der Walzen (4) aufweist.

8. Vorrichtung (20) nach einem der vorangehenden Ansprüche, dadurch gekennzeichnet, dass die Halterung (22) keilförmig ausgebildet ist.

9. Füttervorrichtung (11) mit mindestens einer Walze (4), wobei pro Walze (4) eine Abstreifvorrichtung (20) nach einem der Ansprüche 1 bis 8 vorgesehen ist, die in Transportrichtung (R) eines Fördermediums (M) gesehen nach der Walze (4) angeordnet ist, wobei das eine Ende des Abstreifelementes (21) möglichst nahe an der Walze (4) angeordnet ist.

10. Vorrichtung (11) nach Anspruch 9, dadurch gekennzeichnet, dass das im Bereich der Walze (4) liegende Ende des Abstreifelementes (21) keilförmig ist und/oder eine Form aufweist, die der Walze (4) im Bereich des Abstreifens angepasst ist.

11. Vorrichtung (11) nach Anspruch 9 oder 10, dadurch gekennzeichnet, dass das Abstreifelement (21) im wesentlichen tangential zur Walze (4) angeordnet ist.

12. Vorrichtung (11) nach einem der Ansprüche 9 bis 11, dadurch gekennzeichnet, dass die Breite des Abstreifelementes (21) im wesentlichen derjenigen der Walze (4) entspricht.

13. Anordnung mit einer Füttervorrichtung (11) nach Anspruch 9 bis 12 und einer Zahnradpumpe (10), wobei die Füttervorrichtung (11) in Transportrichtung (R) des Fördermediums (M) gesehen vor der Zahnradpumpe (10) angeordnet ist.

14. Anordnung nach Anspruch 13, dadurch gekennzeichnet, dass die Abstreifvorrichtungen (20) derart angeordnet sind, dass der Abstand zwischen den Walzen (4) einerseits und den Zahnrädern (2) der Zahnradpumpe (10) anderseits möglichst gering ist.
